# EUROPEAN PATENT APPLICATION

(11) **EP 2 487 770 A1**
(43) Date of publication of application: **15.08.2012**
(21) Application number: 10821638.3
(22) Date of filing: 29.09.2010
(51) Int. Cl.: H02J 3/32, H02J 3/00, H02J 3/46

(54) **POWER SUPPLY SYSTEM**

(30) Priority: 05.10.2009 JP 2009232017
(71) Applicant: Panasonic Corporation, Kadoma-shi Osaka 571-8501 (JP)
(72) Inventor: INOUE, Takeshi, 2-1-61 Shiromi, Chuo-ku Osaka 540-6207 (JP); KITAMURA, Nobuhiro, 2-1-61 Shiromi, Chuo-ku Osaka 540-6207 (JP); KASAYA, Masato, 2-1-61 Shiromi, Chuo-ku Osaka 540-6207 (JP)
(74) Representative: Haydn, Christian
(86) International application number: PCT/IB2010/002461
(87) International publication number: WO 2011/042781

(57) **Abstract**

A power supply system includes a current detection unit for detecting a current used by a load and an electric cell. The power supply system further includes a control unit for controlling the electric power stored in the electric cell to be supplied to the load if it is determined that the current detected by the current detection unit exceeds a cutoff threshold.

## Description

### Field of the Invention

The present invention relates to a power supply system provided with an electric cell.

### Background of the Invention

As disclosed in, e.g., Patent document 1, there is conventionally known a power supply system provided with a rechargeable battery. The power supply system is designed to supply an electric power discharged from the battery to various kinds of devices serving as loads in the event that an electric outage occurs in an electrical grid which supplies an electric power from a commercial power source.

Patent document 1: Japanese Patent Application Publication No. 2009-159730

In a power supply system provided in each home, the upper limit of an electric current supplied from a commercial power source is usually decided by a contract with a power company. If an electric current equal to or larger than a contracted current (i.e., a cutoff threshold) is used by the loads of the power supply system provided in the home, a limiter cuts off a power distribution path to thereby stop the supply of the electric power to devices through the electrical grid.

In the event that the power distribution path is cut off by the limiter, the number of the devices of the power supply system needs to be reduced so that the electric current used by the devices serving as loads can be smaller than a contracted electric current. In this state, the limiter is powered and operated to resume the supply of electric power from the commercial power source.

### Summary of the Invention

In view of the above, the present invention provides a power supply system capable of enabling a load to use an electric current larger than a cutoff threshold triggering the cutoff of a power distribution path, without having to cut off the power distribution path through which an electric power is supplied from a commercial power source to the load.

In accordance with an embodiment of the present invention, there is provided a power supply system including: a current detection unit for detecting a current used by a load; an electric cell; and a control unit for controlling the electric power stored in the electric cell to be supplied to the load if it is determined that the current detected by the current detection unit exceeds a cutoff threshold.

The power supply system may further include a breaker provided in a power distribution path through which an electric power is supplied from a commercial power source to the load, the breaker being configured to cut off the power distribution path if the electric current flowing through the power distribution to the load larger than the cutoff threshold and a discharging unit for distributing the electric power stored in the electric cell to the load, the electric cell being provided closer to the load than the breaker. The control unit may be configured to drive the discharging unit if it is determined that the current detected by the current detection unit exceeds the cutoff threshold.

With such configuration, the control unit drives the discharging unit if it is determined that the current detected by the current detection unit exceeds the cutoff threshold. In response, the electric power stored in the electric cell is distributed to the load. Accordingly, the electric current supplied from the commercial power source is reduced by the amount of the electric power supplied from the electric cell. Since the electric cell is connected closer to the load than the breaker, the electric power discharged from the electric cell is distributed to the load without passing through the breaker. Therefore, the power distribution path through which the electric power is supplied from the commercial AC power source to the DC appliances 5 and the AC appliance 6 is not cut off, and it becomes possible to enable the load to use an electric current larger than the cutoff threshold triggering the cutoff of the power distribution path.

The power supply system may further include a DC/AC converter for converting inputted DC power to AC power. The power supply system may be configured to distribute an electric power through the DC/AC converter if the electric power is supplied from the electric cell to an AC load connected to the power distribution path at a secondary side of the breaker.

With such configuration, the electric power can be supplied to the AC load by converting the DC power discharged from the electric cell to AC power through the use of the DC/AC converter. Therefore, even if the electric current used in the AC load exceeds the cutoff threshold, it is possible to restrain the power distribution path from being cut off.

Further, the electric cell may be a rechargeable battery.

With such configuration, the time and effort required in replacing the electric cell can be reduced by using the rechargeable battery the electric cell.

The power supply system may further include a charging unit for charging the electric cell. The control unit may be configured to drive the charging unit if the breaker is in a non-cutoff state.

With such configuration, the control unit drives the charging unit during the non-cutoff state of the breaker in which the electric power can be supplied from the commercial power source to the load. This makes it possible to charge the electric power supplied from the commercial power source to the electric cell.

The power supply system may further include a power generation unit for converting natural energy to an electric power.

In the photovoltaic power generation and the wind power generation using natural energy such as the sunlight and the wind, the power generation amount depends on the weather or other conditions. Accordingly, even if the power supply system is provided with the power generation unit, the cutoff threshold is set greater in preparation for a situation that no electric power is generated by the power generation unit. It is however typical that the cost involved in using the commercial power source becomes higher as the cutoff threshold grows larger. With the configuration noted above, it is possible to enable the load to use an electric current larger than the cutoff threshold. This makes it possible to set the cutoff threshold in conformity with the power generation time during which an electric power is generated by the power generation unit. In other words, the cutoff threshold value is set, e.g., at such a value as to supplement the electric current generated by the power generation unit. This makes it possible to reduce costs as compared with a case where the cutoff threshold value is set at such a value that the electric power can be supplied from the commercial power source to the load during the non-power-generation time.

### Brief Description of the Drawings

The objects and features of the present invention will become apparent from the following description of preferred embodiments given in conjunction with the accompanying drawings, in which:
Fig. 1 is a block diagram showing a power supply system in accordance with an embodiment of the present invention;
Fig. 2 is a block diagram for explaining an AC distribution board and a control unit; and
Fig. 3 is a flowchart illustrating an operation of the power supply system.

### Detailed Description of the Preferred Embodiments

Hereinafter, embodiments of the present invention will be described with reference to the accompanying drawings, which form a part hereof. Throughout the drawings, like reference numerals will be given to like parts, and redundant description thereof will be omitted.

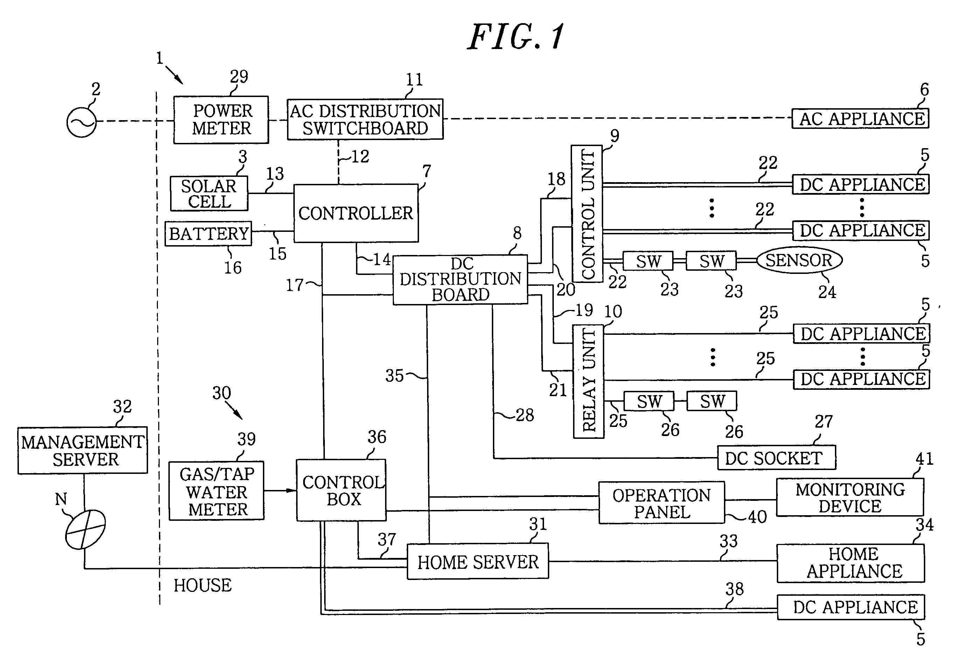

A power supply system in accordance with an embodiment of the present invention will be described with reference to Figs. 1 to 3.

As shown in Fig. 1, a house is provided with a power supply system 1 for supplying an electric power to a variety of home appliances (such as an illuminating device, an air conditioner, an electric device and an audiovisual device) installed in a home. The power supply system 1 supplies an electric power of a commercial AC power source 2 as a home-use commercial power source to operate various kinds of appliances. In addition, the power supply system 1 also supplies an electric power of a solar cell generating the electric power with a natural energy such as sunlight to operate the various kinds of appliances. The power supply system 1 supplies the electric power not only to DC appliances 5 operating with the DC power inputted from a DC power source but also to an AC appliance 6 operating with the AC power inputted from an AC power source 2. In the following description, a house will be taken as an example of the place in which the power supply system is installed. However, the present invention is not limited thereto but may be applied a multi-dwelling unit, an apartment, an office and a factory.

The power supply system 1 is provided with a controller 7 as a system power distribution board and a DC distribution board in which a DC breaker is arranged) 8. The power supply system 1 is further provided with a control unit 9 and a relay unit 10 for controlling operations of the DC appliances 5 installed in the house.

An AC distribution board 11 for dividing the AC power is connected to the controller 7 via an AC power line 12. The controller 7 is connected to the commercial AC power source 2 via the AC distribution board 11 and is connected to the solar cell 3 via a DC power line 13. The controller 7 receives AC power from the AC distribution board 11 and receives DC power from the solar cell 3. The controller 7 converts the AC power and the DC power to specified DC power to be used as the source power of the appliances. The controller 7 outputs the converted DC power to the DC distribution board 8 via a DC power line 14 or to a battery 16 as an electric cell via a DC power line 15 to thereby store the DC power in the battery 16. Not only does the controller 7 receive the AC power from the AC distribution board 11 but also the controller 7 can convert the electric power from the solar cell 3 or the battery 16 to an AC power and supply the AC power to the AC distribution board 11. The controller 7 exchanges data with the DC distribution board 8 via a signal line 17.

The DC distribution board 8 is a kind of breaker corresponding to the DC power. The DC distribution board 8 divides the DC power inputted from the controller 7 and outputs the divided DC power to the control unit 9 via a DC power line 18 or to the relay unit 10 via a DC power line 19. The DC distribution board 8 exchanges data with the control unit 9 via a signal line 20 or with the relay unit 10 via a signal line 21.

A plurality of DC appliances 5 is connected to the control unit 9. The DC appliances 5 are connected to the control unit 9 via DC supply lines 22 each of which has a pair of lines capable of transmitting both the DC power and data therethrough. The electric power and the data are transmitted to the DC appliances 5 through the respective DC supply lines 22 by virtue of so-called power line communications in which communications signals for transmitting data with a high-frequency carrier wave are overlapped with the DC power to be supplied to the DC appliances 5 by using a pair of lines. For example, both the electric power and the data are transmitted to each of the DC appliances 5 by using a pair of lines. The control unit 9 receives the DC power for the DC appliances 5 via a DC power line 18. Based on an operation instruction obtained from the DC distribution board 8 via a signal line 20, the control unit 9 determines which of the DC appliances 5 is to be controlled in what manner. Then, the control unit 9 outputs the DC power and the operation instruction to the designated DC appliances 5 via the DC supply lines 22, thereby controlling the operations of the corresponding DC appliances 5.

Switches 23 operated to switch over the operations of the DC appliances 5 are connected to the control unit 9 via a DC supply line 22. In addition, a sensor 24 for detecting electric waves transmitted from, e.g., an infrared remote controller is connected to the control unit 9 via the DC supply line 22. Accordingly, the DC appliances 5 are controlled by transmitting communications signals via the DC supply lines 22 in response to not only the operation instruction from the DC distribution board 8 but also the operation of the switches 23 and the detection in the sensor 24.

A plurality of DC appliances 5 is connected to the relay unit 10 via individual DC power lines 25. The relay unit 10 receives the DC power for the DC appliances 5 via a DC power line 19 and determines which of the DC appliances 5 is to be operated based on an operation instruction obtained from the DC distribution board 8 via the signal line 21. The relay unit 10 controls the operations of the DC appliances 5 determined to be operated by turning on and off the supply of power to the corresponding DC appliances 5 via the DC power lines 25 using relays built therein. A plurality of switches 26 for manually operating the DC appliances 5 is connected to the relay unit 10. The DC appliances 5 are controlled by manually operating the switches 26 and causing the relays to turn on and off the supply of the power to the DC power lines 25.

DC sockets 27 installed in the house in the form of, e.g., a wall socket and a floor socket, are connected to the DC distribution board 8 via a DC power line 28. If the plugs (not shown) of the DC appliances 5 are inserted into the DC sockets 27, it is possible to directly supply the DC power to the DC appliances 5.

A power meter 29 capable of remotely measuring the amount of the power used in the commercial AC power source 2 is connected between the commercial AC power source 2 and the AC distribution board 11. The power meter 29 is equipped with not only the function of remotely measuring the amount of the power used in the commercial AC power source 2 but also, e.g., a power line communications function and a wireless communications function. The power meter 29 transmits the measurement results to a power company or the like through power line communications or wireless communications.

The power supply system 1 is provided with a network system 30 that makes it possible to control various kinds of home appliances through network communications. The network system 30 includes a home server 31 as a control unit thereof. The home server 31 is connected to an outdoor management server 32 via a network N such as the Internet and is also connected to home appliances 34 via a signal line 33. The home server 31 is operated by the DC power supplied from the DC distribution board 8 via a DC power line 35.

A control box 36 for managing the operations of various kinds of home appliances controlled through network communications is connected to the home server 31 via a signal line 37. The control box 36 is connected to the controller 7 and the DC distribution board 8 via a signal line 17. The control box 36 is capable of directly controlling the DC appliances 5 via a DC supply line 38. A gas/tap water meter 39 capable of remotely measuring, e.g., the amount of gas and tap water used, is connected to the control box 36. The control box 36 is connected to an operation panel 40 of the network system 30. A monitoring device 41 formed of, e.g., a door phone extension unit, a sensor or a camera, is connected to the operation panel 40.

If an operation instruction for the various kinds of home appliances is inputted via the network N, the home server 31 notifies the control box 36 of the operation instruction and operates the control box 36 so that the home appliances can be operated based on the operation instruction. Moreover, the home server 31 can provide various kinds of information obtained from the gas/tap water meter 39 to the management server 32 via the network N. If an abnormality detected by the monitoring device 41 is notified to the home server 31 through the operation panel 40, the home server 31 provides the information on the detected abnormality to the management server 32 via the network N.

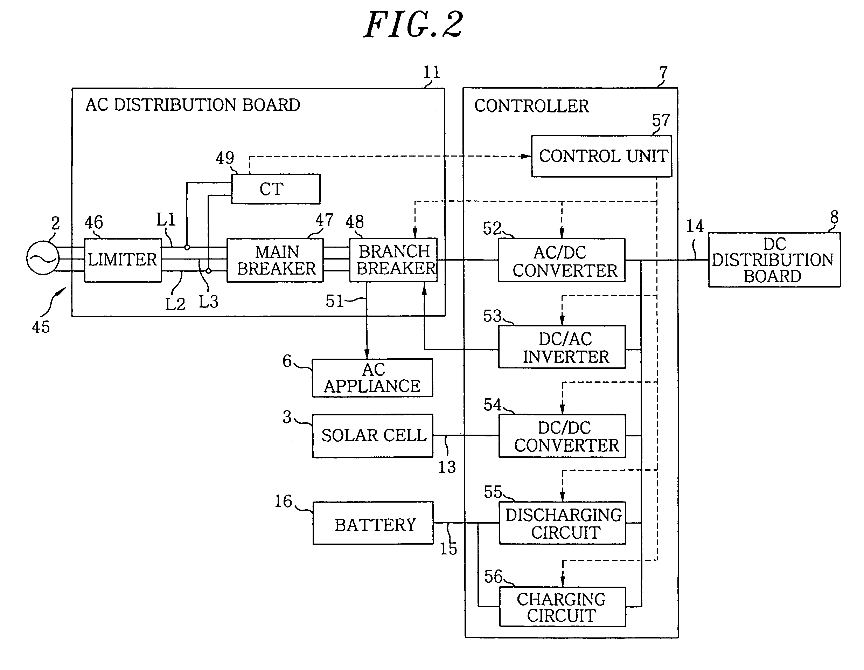

Next, the AC distribution board 11 and the controller 7 will be described with reference to Fig. 2.

The power supply system 1 of the present embodiment includes a power distribution path 45 through which the electric power is supplied from the commercial AC power source 2 to the AC distribution board 11. In the power distribution path 45, a first line L1 and a second line L2 are applied with an AC voltage of 100 V supplied from the commercial AC power source 2. In contrast, a third line L3 is kept at 0 V.

As shown in Fig. 2, a limiter 46 serving as a breaker, a main breaker 47 and a branch breaker 48 are arranged within the AC distribution board 11 in the named order from the side of the commercial AC power source 2 as the primary side. The limiter 46, the main breaker 47 and the branch breaker 48 are connected to the power distribution path 45. An AC detector (hereinafter often referred to as "CT") 49 as a current detection unit for acquiring electric currents flowing through the first line L1 and the second line L2 is provided in the power distribution path 45 between the limiter 46 and the main breaker 47.

The limiter 46 cuts off the power distribution path 45 in the event that the electric current supplied to the power distribution path 45 exceeds a contracted current threshold K1 (e.g., 20 A at 100 V and one half current at 200 V) which is a cutoff threshold set based on a contact with a power company providing the commercial AC power source 2. In other words, when the electric power is used at the secondary side to which the DC appliances 5 and the AC appliance 6 are connected, an electric current corresponding to the capacity of the loads flows through the limiter 46. In case where an electric current larger than the contracted current threshold K1 is supplied from the commercial AC power source 2, a bimetal (not shown) provided within the limiter 46 is heated and bent by large amount of the electric current, thereby separating contact points and stopping the supply of electric power from the commercial AC power source 2. The limiter 46 cuts off the power distribution path 45 if the total current A flowing the first line L1 and the second line L2 exceeds the contracted current threshold value K1.

The main breaker 47 connected to the power distribution path 45 at the secondary side of the limiter 46 cuts off the power distribution path 45 if an abnormal current flows due to the occurrence of electric leakage or short circuit at the secondary side. The branch breaker 48 is provided to individually correspond to branch paths 51 branched in a corresponding relationship with the AC appliance 6 or each of the rooms in a house. The branch breaker 48 individually cuts off each of the branch paths 51 if the electric current supplied through the respective branch paths 51 exceeds a branch current threshold K2 set smaller than the contracted current threshold value K1.

On the other hand, the controller 7 includes an AC/DC converter 52, a DC/AC inverter 53 as a DC/AC converter, a DC/DC converter 54, a discharging circuit 55 as a discharging means, a charging circuit 56 as a charging means and a control unit 57. The control unit 57 serves as a control means that distributes an electric current to the DC appliances 5 and the AC appliance 6 by controlling the branch breaker 48, the AC/DC converter 52, the DC/AC inverter 53, the DC/DC converter 54, the discharging circuit 55 and the charging circuit 56. In other words, the control unit 57 is configured to, based on the detection result from the CT 49, control the electric current A supplied from the commercial AC power source 2.

More specifically, the AC/DC converter 52 receives AC power from the commercial AC power source 2 through the AC distribution board 11, converts the AC power to DC power and then outputs the DC power to the DC distribution board 8. The DC/DC converter 54 converts the voltage of the DC power generated by the solar cell 3 to a voltage usable in the DC appliances 5 and then outputs the converted voltage to the DC distribution board 8.

The charging circuit 56 outputs DC power to the battery 16 and charges the battery 16 with the DC power. In other words, the DC power supplied from the commercial AC power source 2 and converted by the AC/DC converter 52, and the DC power generated by the solar cell 3 and voltage-converted by the DC/DC converter 54 are outputted by the charging circuit 56 to the battery 16 and are changed in the battery 16. The discharging circuit 55 discharges the charged battery 16, thereby causing the battery 16 to output DC power.

The DC/AC inverter 53 converts the DC power outputted from the battery 16 and the DC power generated by the solar cell 3 to AC power. The AC power thus converted is applied to the AC appliance 6 through the branch path 51 to which the branch breaker 48 is connected.

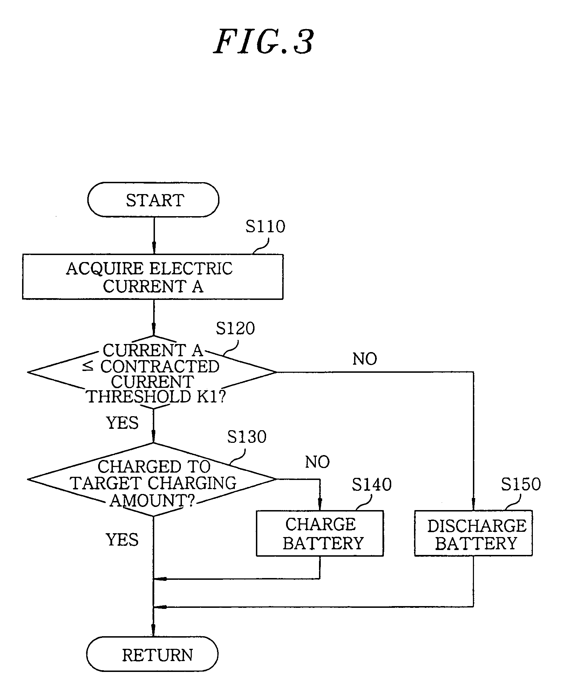

Next, the operation of the power supply system 1 configured as above, particularly the operation of the power supply system 1 in a non-power-generation state in which the solar cell 3 does not generate an electric power, will be described with reference to the flowchart shown in Fig. 3.

In step S110, the control unit 57 sums up the electric currents of the first line L1 and the second line L2 detected by the CT 49 and consequently acquires the electric current A supplied from the commercial AC power source 2. In step S120, the control unit 57 determines whether the electric current A thus acquired exceeds the contracted current threshold K1 at which the limiter 46 cuts off the power distribution path 45. In general, the limiter 46 is designed to cut off the power distribution path 45 when an electric current equal to or larger than the contracted current threshold K1 is supplied for a specified time period or more.

If the electric current A is equal to or smaller than the contracted current threshold K1 (if YES in step S120), the control unit 57 determines that the power distribution path 45 is less likely to be cut off. Then, the control unit 57 determines whether the battery 16 is charged to a target charging amount (step S130). When repeatedly charged to a full charging capacity, the battery 16 suffers from accelerated degradation, as a result of which the chargeable capacity of the battery 16 grows smaller. In the present embodiment, therefore, a charging amount smaller than the full charging capacity (e.g., 80% of the full charging capacity) is set as the target charging amount.

If the battery 16 is charged with the target charging amount (if YES in step S130), the control unit 57 determines that there is no need to further charge the battery 16. The control unit 57 repeatedly performs the steps of the flowchart shown in Fig. 3 while the electric power is supplied from the commercial AC power source 2 to the DC appliances 5 or the AC appliance 6 connected to the secondary side. For that reason, if it is determined in step S130 that there is no need to further charge the battery 16 (if YES in step S130), the control unit 57 returns back to step S110 and acquires the electric current A by performing the processing of step S110 again.

On the other hand, if the charged amount of the battery 16 is less than the target charging amount (if NO in step S130), the control unit 57 determines that there is a need to charge the battery 16. Then, the control unit 57 charges the battery 16 by controlling the branch breaker 48, the AC/DC converter 52 and the charging circuit 56 (step S140). In other words, the electric power supplied from the commercial AC power source 2 is divided into the electric power which is to be supplied to the AC appliance 6 through the branch breaker 48 and the electric power which is to be converted to DC power by the AC/DC converter 52. The DC power converted by the AC/DC converter 52 is supplied to the respective DC appliances 5 through the DC distribution board 8 and is outputted and charged to the battery 16 through the charging circuit 56. In order to repeatedly perform the processing steps of the flowchart, the control unit 57 returns back to step S110 and acquires the electric current A again (step S110).

On the other hand, if it is determined in step S120 that the electric current A is larger than the contracted current threshold K1 (if NO in step S120), the control unit 57 determines that the electric current A exceeds the contracted current threshold K1. Then, the control unit 57 discharges the battery 16 by controlling the discharging circuit 55 (step S150). In such case, thee electric power discharged from the battery 16 is supplied to the DC appliances 5 through the DC distribution board 8, so that the AC power coming from the commercial AC power source 2 is supplied to the AC appliance 6. Therefore, as compared with a case where both of the DC appliances 5 and the AC appliance 6 are powered by the electric power coming from the commercial AC power source 2, it is possible to reduce the electric power supplied from the commercial AC power source 2, and the electric current A becomes smaller, so that the power distribution path 45 is prevented from being cut off by the limiter 46, whereby the power distribution path 45 is kept in a normal (non-cutoff) state. If the load of the AC appliance 6 is heavy, the DC power discharged from the battery 16 is converted to AC power by the DC/AC inverter 53 and is supplied to the AC appliance 6. Further, in order to repeatedly perform the processing steps of the flowchart, the control unit 57 returns back to step S110 and acquires the electric current A again (step S110).

Next, description will be made on the operation of the power supply system 1 during the power generation time in which the solar cell 3 generates an electric power and supplies the electric power thus generated.

First, the control unit 57 controls the DC/DC converter 54 to convert the voltage of the DC power generated by the solar cell 3 and to output the voltage-converted DC power to the DC distribution board 8. At the same time, the control unit 57 controls the DC/AC inverter 53 and the branch breaker 48 to convert the DC power generated by the solar cell 3 to AC power and to supply the AC power to the AC appliance 6.

Further, if the amount of the electric power generated by the solar cell 3 is greater than the amount of the electric power used by the DC appliances 5 and the AC appliance 6 connected to the power supply system 1, the control unit 57 controls the charging circuit 56 so that the DC power outputted from the DC/DC converter 54 can be changed in the battery 16.

In the event that the electric current A detected by the CT 49 grows larger than the contracted current threshold K1, the control unit 57 controls the discharging circuit 55 to discharge the electric power stored in the battery 16. In other words, if the DC appliances 5 and the AC appliance 6 use an electric current exceeding the sum of the electric current generated by the solar cell 3 and the contracted current threshold K1., the electric power is supplied from the battery 16 to the DC appliances 5 and the AC appliance. Thus, the electric current A detected by the CT 49 becomes smaller.

The power supply system 1 of the embodiment described above can provide the following effects.
(1) The control unit 57 drives the discharging circuit 55 if it is determined that the electric current A detected by the CT 49 exceeds the contracted current threshold K1. In response, the electric power stored in the battery 16 is distributed to the DC appliances 5 and the AC appliance 6. Accordingly, the electric current A supplied from the commercial AC power source 2 is reduced by the amount of the electric power supplied from the battery 16. Since the battery 16 is connected closer to the DC appliances 5 and the AC appliance 6 than the limiter 46, the electric power discharged from the battery 16 is distributed to the DC appliances 5 and the AC appliance 6 without passing through the limiter 46. Therefore, the power distribution path 45 through which the electric power is supplied from the commercial AC power source to the DC appliances 5 and the AC appliance 6 is not cut off, and it becomes possible to enable the DC appliances 5 and the AC appliance 6 to use an electric current larger than the contracted current threshold K1 triggering the cutoff of the power distribution path 45.
(2) The electric power can be supplied from the battery 16 to the AC appliance 6 by converting the DC power discharged from the battery 16 to AC power through the use of the DC/AC inverter 53. Therefore, even if the electric current used in the AC appliance 6 exceeds the contracted current threshold K1, the cutoff of the power distribution path 45 can be prevented by supplying the electric power from the battery 16 to the AC appliance 6.
(3) The time and effort required in replacing an electric cell can be reduced by using the rechargeable battery 16 as an electric cell that serves as a backup power source.
(4) The control unit 57 drives the charging circuit 56 during the non-cutoff state of the limiter 46 in which the electric power can be supplied from the commercial AC power source 2 to the DC appliances 5 and the AC appliance 6. This makes it possible to charge the electric power supplied from the commercial AC power source 2 to the battery 16.
(5) In the photovoltaic power generation using the sunlight, the power generation amount depends on the weather or other conditions. Accordingly, even if the conventional power supply system is provided with the solar cell 3, the contracted current threshold K1 is set greater in preparation for a situation that no electric power is generated by the solar cell 3. It is however typical that the cost involved in using the commercial AC power source 2 becomes higher as the contracted current threshold K1 grows larger.

In the present embodiment, it is possible to enable the DC appliances 5 and the AC appliance 6 to use the electric current A larger than the contracted current threshold K1. This makes it possible to set the contracted current threshold K1 in conformity with the power generation time during which electric power is generated by the solar cell 3. In other words, the contracted current threshold K1 is set, e.g., at such a value as to supplement the electric current generated by the solar cell 3. This makes it possible to reduce costs as compared with the conventional case where the contracted current threshold K1 is set at such a value that the electric power can be supplied from the commercial AC power source 2 to the DC appliances 5 and the AC appliance 6 during the non-power-generation time.

The power supply system 1 of the embodiment described above may be modified as follows.

The power supply system 1 may include a power generation unit using natural energy, such as a wind power generation unit for generating an electric power by rotating a propeller with a wind, a geothermal power generation unit using terrestrial heat or a hydro power generation unit using energy from water. Alternatively, the power supply system 1 may not include the above described power generation unit noted and the solar cell 3.

Since an electric cell has an upper limit in its charging capacity, a large cell having an increased charging capacity needs to be used if discharging is performed over an extended period of time. Accordingly, the power supply system 1 may include a generator capable of arbitrarily generating an electric power, e.g., a fuel cell that generates an electric power by reacting hydrogen contained in a gas with oxygen. The combined use of the generator and the electric cell makes it possible to restrain the electric cell from becoming larger in size. In other words, the electric cell is discharged until the generator starts power generation, so that the electric power can be rapidly supplied when the power consumption gets increased, thereby restraining the limiter 46 from cutting off the power distribution path 45. Further, even when an electric cell having a small charging capacity is used, the time period for supplying an electric current equal to or greater than the contracted current threshold K1 can be extended by supplying the electric power from the generator.

In the event that a fuel cell or a power generation unit such as a wind power generation unit generates the electric power equal to or greater than the amount of electric power consumed by the DC appliances 5 and the AC appliance 6, the excess power may be stored in the battery 16. In other words, if the power supply system 1 is provided with a power generation unit, the electric power may be charged in the battery 16 regardless of the cutoff state and the non-cutoff state of the power distribution path 45.

A primary battery capable of performing only a discharging operation may be provided as an electric cell, in which case a completely discharged primary battery may be replaced with a new one.

The DC/AC inverter 53 may be omitted and the DC power discharged from the battery 16 may be supplied to only the DC appliances 5.

A discharging startup threshold (e.g., 18A at 100 V) equal to or smaller than the contracted current threshold K1 may be set in advance and an electric power may be discharged from the battery 16 when the electric current A becomes equal to or larger than the discharging startup threshold. Alternatively, an electric power may be discharged from the battery 16 when the electric current A becomes equal to or greater than the contracted current threshold K1.

A current detection unit for detecting the electric current used in the DC appliances 5 and the electric current used in the AC appliance 6 may be provided independently of each other. In this case, the AC power outputted from the commercial AC power source 2 may be supplied to the AC appliance 6 and the DC power outputted from the battery 16 may be supplied to the DC appliances 5, and the DC power may be converted to AC power and may be supplied to the AC appliance 6 when the electric current used in the AC appliance 6 is larger than the contracted current threshold K1. Power loss is generated when converting the DC power to the AC power and vice versa. Therefore, if the conversion between the DC power and the AC power is reduced, it becomes possible to reduce the power loss and to increase the efficiency.

While the invention has been shown and described with respect to the embodiments, it will be understood by those skilled in the art that various changes and modification may be made without departing from the scope of the invention as defined in the following claims.

## Claims

1. A power supply system, comprising:
a current detection unit for detecting a current used by a load;
an electric cell; and
a control unit for controlling the electric power stored in the electric cell to be supplied to the load if it is determined that the current detected by the current detection unit exceeds a cutoff threshold.

2. The power supply system of claim 1, further comprising:
a breaker provided in a power distribution path through which an electric power is supplied from a commercial power source to the load, the breaker being configured to cut off the power distribution path if the electric current flowing through the power distribution to the load larger than the cutoff threshold; and
a discharging unit for distributing the electric power stored in the electric cell to the load, the electric cell being provided closer to the load than the breaker,
wherein the control unit is configured to drive the discharging unit if it is determined that the current detected by the current detection unit exceeds the cutoff threshold.

3. The power supply system of claim 2, further comprising:
a DC/AC converter for converting inputted DC power to AC power,
wherein the power supply system is configured to distribute an electric power through the DC/AC converter if the electric power is supplied from the electric cell to an AC load connected to the power distribution path at a secondary side of the breaker.

4. The power supply system of claim 2 or 3, wherein the electric cell is a rechargeable battery.

5. The power supply system of claim 4, further comprising:
a charging unit for charging the electric cell,
wherein the control unit is configured to drive the charging unit if the breaker is in a non-cutoff state.

6. The power supply system of any one of claims 2 to 5, further comprising:
a power generation unit for converting natural energy to an electric power.
